# EUROPEAN PATENT SPECIFICATION

(11) **EP 2 965 634 B1**
(45) Date of publication and mention of the grant of the patent: **06.11.2019**
(21) Application number: 14760447.4
(22) Date of filing: 04.03.2014
(51) Int. Cl.: A23F 3/16

(54) **GREEN TEA BEVERAGE**
GRÜNTEEGETRÄNK
BOISSON AU THÉ VERT

(30) Priority: 04.03.2013 JP 2013042398; 04.03.2013 JP 2013042399; 04.03.2013 JP 2013042416; 04.03.2013 JP 2013042421; 04.03.2013 JP 2013042425
(43) Date of publication of application: 13.01.2016
(73) Proprietor: Suntory Holdings Limited, Kita-ku, Osaka-shi Osaka 530-8203 (JP)
(72) Inventor: KOBAYASHI, Shinichi, Kawasaki-shi Kanagawa 211-0067 (JP); FURUTA, Hiroki, Kawasaki-shi Kanagawa 211-0067 (JP); SENGA, Yoshinori, Kawasaki-shi Kanagawa 211-0067 (JP); IBUSUKI, Daigo, Kawasaki-shi Kanagawa 211-0067 (JP)
(74) Representative: Vossius & Partner Patentanwälte Rechtsanwälte mbB
(86) International application number: PCT/JP2014/055464
(87) International publication number: WO 2014/136774

(56) References cited:
- EP-A1- 2 193 721
- EP-A1- 2 499 920
- WO-A1-2009/041555
- WO-A1-2012/029132
- JP-A- S6 324 851
- JP-A- 2005 080 552
- JP-A- 2007 110 990
- JP-A- 2008 178 320
- JP-A- 2009 296 925
- JP-A- 2009 296 925
- JP-A- 2011 097 905
- JP-A- 2011 505 816
- JP-A- 2012 183 064
- JP-A- 2013 169 152
- JP-B- S4 749 719
- US-A1- 2005 003 068

## Description

### TECHNICAL FIELD

The present invention relates to a green tea beverage comprising a low concentration of a catechin and specified amounts of valine and methionine.

### BACKGROUND ART

In recent years, there have been developed and sold on the market many packaged tea beverages packed in containers such as cans and PET bottles, and among those tea beverages, the market for green tea beverages has been growing. Customer preference for such tea beverages has increased, and there has recently been a tendency that green tea beverages giving intense umami and kokumi and yet having reduced astringency are preferred. Thus, various tea beverages have been proposed which are formulated by adopting the idea of extracting umami components alone without extracting catechins with strong astringency, or the idea of reducing the astringency of catechins.

For example, Patent Literature 1 discloses a method for producing a liquid green tea extract, wherein tea leaves are extracted with water at low temperatures of 0 to 30°C and the resultant liquid extract is contacted with polyvinylpolypyrrolidone (PVPP) to remove catechins. Patent Literature 2 discloses that tea leaves are impregnated and extracted with static water which has dissolved oxygen removed therefrom and has been held at 0 to 36°C, whereby there can be obtained a liquid tea extract giving umami and yet having reduced astringency. Patent Literature 3 discloses that tea leaves are extracted with deaerated water with a dissolved oxygen concentration of not more than 1 ppm, at a temperature of not lower than 20°C and lower than 60°C (preferably not higher than 50°C), such that the total catechins concentration and the total gallic acid ester-type catechins concentration are within specified ranges, whereby there can be produced a tea beverage having reduced astringent and stringent tastes which are sensed when one drinks the one sold in a state of being cooled to a subnormal temperature. Patent Literature 4 discloses a tea beverage characterized in that astringency is reduced and also kokumi and umami are enhanced by incorporating not less than 0.2 µg/mL of a glyceroglycolipid in a low-catechin tea beverage. Patent Literature 5 discloses a tea beverage characterized in that the bitterness and astringency of catechins, etc. are reduced by incorporating, a polyamino acid having a specified isoelectric point. Patent Literature 6 discloses a tea beverage with good savor, which is characterized in that the bitterness/astringency component, tannin, is removed from a tea beverage to thereby increase the ratio of the umami component, amino acids, to tannin (amino acids/tannin ratio).

In the meantime, valine has been known as an amino acid giving bitterness, and there has been proposed a contrivance for masking the bitterness of valine particularly in beverages and foods with a light taste, such as refreshing drinks (Patent Literature 7). Patent Literature 8 relates to a method for treating tea leafs which assures that the contents of amino acids and catechins are higher than those extracted by conventional extraction procedures.

### CITATION LIST

### PATENT LITERAURES

Patent Literature 1: Japanese Patent Application Publication No. JP 2003-204754
Patent Literature 2: Japanese Patent Application Publication No. JP 2000-50799
Patent Literature 3: Japanese Patent Application Publication No. JP H06-343389
Patent Literature 4: Japanese Patent Application Publication No. JP 2011-10641
Patent Literature 5: Japanese Patent Application Publication No. JP 2012-110248
Patent Literature 6: Japanese Patent Application Publication No. JP H09-220055
Patent Literature 7: Japanese Patent Domestic Re-publication No. JP 2004-052125
Patent Literature 8: JP 2009 269 925 A

### SUMMARY OF INVENTION

### TECHNICAL PROBLEM

Low-catechin tea beverages have some drawbacks in that they lack the kokumi and umami of tea and are light and watery in taste, and that they are unbalanced between kokumi/umami and the bitterness/astringency of catechins. Also, low-catechin tea beverages have a pronounced uncomfortable retort odor caused by heat treatments such as retort sterilization, which may impair the high-quality aroma and flavor inherent in tea.

The present invention has as its object to provide a packaged tea beverage which is to be subjected to heat sterilization and long-term storage, wherein the beverage is a green tea beverage giving intense umami and kokumi and yet having reduced astringency.

### SOLUTION TO PROBLEM

In order to achieve the aforementioned object, the present inventors have made intensive studies, and as a result, found that incorporating a specified amount of the amino acid known to have bitterness, valine, in a low-catechin tea beverage surprisingly results in a significant enhancement in kokumi and umami, thereby leading to an improvement in drinkability. Further, the inventors found that this incorporation is also effective for suppressing a retort odor which is distinctly perceived in a low-catechin tea beverage; thus, the inventors have completed the present invention.

More specifically, the present invention includes the following.
(1) A packaged green tea beverage comprising the following components:
   (a) 50 to 400 ppm of a catechin,
   (b) 0.5 to 100 ppm of valine.
   (c) 0.1 to 4.0 ppm of methionine.
2. The beverage according to item 1, comprising 1.0 to 90 ppm of valine.
3. The beverage according to item 1 or 2, further comprising (f) 2.8 to 10 ppb of linalol and (g) 0.2 to 1.0 ppb of phenylacetaldehyde.
4. The beverage according to any one of items 1 to 3, wherein the weight ratio of methionine to valine ((c)/(b)) is not more than 5.
5. The beverage according to any one of items 1 to 4, further comprising (h) raffinose and (i) stachyose, and having a total amount of the raffinose and the stachyose ((h)+(i)) in the tea beverage of 10 to 100 ppm.
6. The beverage according to any one of items 1 to 5, wherein the volume of the beverage is in the range of 350 mL to 1000 mL.

Herein disclosed is further:
(1) A green tea beverage comprising 50 to 400 ppm of a catechin and 0.5 to 100 ppm of valine.
(2) The green tea beverage as set forth in (1), wherein the valine is incorporated in the form of a plant extract.
(3) The green tea beverage as set forth in (2), wherein the plant extract is a tea leaf extract.
(4) The beverage as set forth in any of (1) to (3), further comprising methionine at a concentration of not more than 5.0 ppm.

The present disclosure further includes:
(1) A tea beverage comprising 50 to 400 ppm of a catechin, 10 to 50 ppm of theanine, and not more than 5 ppm of methionine, and having a ratio of the methionine to the theanine (methionine/theanine) of 0.035 to 0.200.
(2) The tea beverage as set forth in (1), further comprising valine at a concentration of 0.5 to 100 ppm.
(3) The tea beverage as set forth in (1) or (2), wherein the tea beverage is a packaged beverage.

The present disclosure further includes:
(1) A packaged tea beverage comprising 50 to 400 ppm of a catechin and 2 to 15 mg/100 mL of phosphoric acid.
(2) The green tea beverage as set forth in (1), comprising at least one aroma component selected from the group consisting of linalol, linalol oxide, geraniol, and phenylacetaldehyde.
(3) The green tea beverage as set forth in (1) or (2), wherein the phosphoric acid is incorporated in the form of a tea leaf extract.

The present disclosure further includes:
(1) A tea beverage comprising raffinose, stachyose, and a catechin, having a total amount of the raffinose and the stachyose of not less than 10 ppm, and having a content of the catechin of 50 to 400 ppm.
(2) The tea beverage as set forth in (1), having a relative ratio of the raffinose and the stachyose to the catechin ((raffinose + stachyose)/catechin) of not less than 0.04.

The present disclosure further includes:
(1) A tea beverage comprising 50 to 400 ppm of a catechin, 0.2 to 1.0 ppb of phenylacetaldehyde, and 2.8 to 10.0 ppb of linalol.
(2) The tea beverage as set forth in (1), having a ratio of the linalol to the phenylacetaldehyde (linalol/phenylacetaldehyde) of 5 to 50.

### ADVANTAGEOUS EFFECTS OF INVENTION

The green tea beverage of the present invention is a low-catechin tea beverage and yet has moderate kokumi and umami as well as high-quality aroma and flavor. The inventive tea beverage has little change in aroma and flavor with time in a case where it is drunk little by little over a long period of time in the office or the like, and can be particularly enjoyed even in a normal temperature zone.

### BRIEF DESCRIPTION OF DRAWING

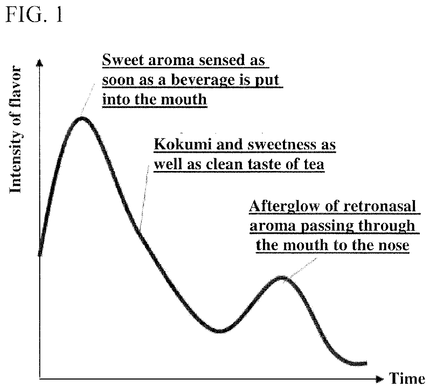

FIG. 1 shows the visualization of the flavor given by the green tea beverage of the present invention.

### DESCRIPTION OF EMBODIMENTS

### (Valine)

Examples of the valine (herein also referred to as "(b)") that can be used in the present invention include commercially available valine products, synthetic valine products, and other edible valine products regardless of their production method. D-, L-, and DL-isomers of valine can also be used, with the L-isomer thereof being most preferably used. Specific examples of the L-isomer thereof include L-valines produced by a fermentation or synthesis method.

Plants and plant extracts containing L-valine can also be used as they are or in a purified form (including a coarsely purified form). The plant extracts can be preferably exemplified by a green tea leaf extract. Addition of valine in the form of a green tea leaf extract is advantageous in that this makes it possible to simply produce a tea beverage having natural palatability solely on the basis of tea-derived components without the use of an additive (excluding an antioxidant).

In general, a green tea leaf extract is rich in amino acids such as theanine, glutamic acid, asparatic acid, and methionine, but is poor in valine. Thus, in the process of using a green tea leaf extract, it is preferable to subject green tea leaves to physical or chemical treatment to increase the concentration of valine. Such a treatment method is specifically exemplified by a treatment method in which green tea leaves as a source material are impregnated with an aqueous solution containing valine, and the impregnated leaves are dried by roasting (refer to Japanese Patent Application Publication No. JP 2012-183064). A mode of the invention, in which the valine is incorporated in the form of a green tea leaf extract obtained by impregnating green tea leaves as a source material with an aqueous solution containing valine and drying the impregnated leaves by roasting at a temperature of 100 to 200°C, is one of preferred modes of this invention. The use of this green tea leaf extract obtained by impregnation with valine and drying by roasting imparts a roasted aroma and a clean taste to the green tea beverage of the present invention.

The amount of the valine to be incorporated in the present invention is in the range of 0.5 to 100 ppm, preferably 1.0 to 90 ppm, more preferably 1.0 to 10 ppm, based on the total amount of the low-catechin tea beverage. Incorporation of valine in an amount within the aforementioned range improves the aroma and flavor of a low-catechin tea almost without giving the bitterness of valine to the beverage.

### (Low-catechin tea beverage)

The present invention contemplates improving the aroma and flavor of a low-catechin tea beverage by incorporating a specified amount of the valine described above in the beverage. The green tea beverage as referred to in this invention is a generic name for beverages incorporating a liquid tea leaf extract obtained, using water, hot water, or an aqueous solution containing an extraction aid, from green tea leaves manufactured from tea leaves taken from the plants of the genus *Camellia,* including the varieties *C. sinensis, C. assamica* and *Yabukita,* and their hybrids (e.g., *Sencha, Bancha, Gyokuro, Tencha, Kamairicha*).

The green tea beverage of the present invention excludes *Hojicha* (roasted tea) tea beverages. *Hojicha* is a tea produced by roasting the aforementioned green tea leaves (e.g., *Sencha, Bancha*) and/or tea stems over high heat, and thus has a unique roasted aroma. Since this roasted aroma, combined with the bitterness of valine, causes bitterness to be strongly perceived, incorporating valine in a *Hojicha* tea beverage results in yielding a tea beverage having bitterness but no kokumi.

Fort the purpose of the present invention, the term "a catechin" (herein also referred to as "(a)") refers to non-polymerized monomeric catechins ((+)-catechin (hereinafter referred to as "C"), (-)-epicatechin (hereinafter "EC"), (+)-gallocatechin (hereinafter "GC"), (-)-epigallocatechin (hereinafter "EGC"), (-)-catechin gallate (hereinafter "Cg"), (-)-epicatechin gallate (hereinafter "ECg"), (-)-gallocatechin gallate (hereinafter "GCg"), and (-)-epigallocatechin gallate (hereinafter "EGCg")). The catechin content refers to the total amount of all of these kinds of non-polymerized catechins. Those members of the class of non-polymeric catechins which have a gallate group (*i.e.,* Cg, ECg GCg, EGCg) are referred to as "gallate-type catechins", and the gallate-type catechin content refers to the total amount of the above-mentioned gallate-type catechins. Those members of the class of non-polymeric catechins which do not have a gallate group (*i.e.,* C, EC, GC, EGC) are referred to as "free catechins", and the free catechin content refers to the total amount of the above-mentioned free catechins. The catechin content in the beverage is determined and quantified by a process based on high performance liquid chromatography (HPLC).

The "low-catechin tea beverage" refers to a green tea beverage comprising one or more types of the catechins listed above at a total concentration of 50 to 400 ppm, preferably 60 to 380 ppm, more preferably 75 to 350 ppm, based on the total amount of the beverage. The type of such a catechin is not particularly limited, but setting the ratio of free catechins to be higher than that of gallate-type catechins allows the below-described effects of the valine according to the present invention to be exhibited more remarkably.

In general, neutral and low-catechin tea beverages having no sweetener or acidulant added thereto are problematic in that they are weak in initial aroma and lingering aroma, short of kokumi and umami, and watery in taste, as compared to tea beverages containing catechins at a normal or high concentration, *i.e.,* at more than 400 ppm. However, the inventive low-catechin tea beverage comprising a specified amount of valine shows a significantly enhancement in retronasal aroma. The "retronasal aroma" refers generally to an aroma perceived when alcohol, etc. is put into the mouth and, as it stands, air is inhaled through the mouth, passed through the oral and nasal cavities, and exhaled through the nose. However, for the sake of convenience, this term shall refer herein to an aroma passing through the mouth to the nose in the afterglow of flavor lingering after a beverage is swallowed. The mechanism for enhancing retronasal aroma is unknown, but this may be presumed to be because incorporating a specified amount of valine in the inventive green tea beverage selectively enhances the sweet aroma and kokumi inherent in tea.

The inventive green tea beverage comprising a specified amount of valine has the clean taste of a low-catechin tea and is well-balanced between kokumi/umami and bitterness/astringency. FIG. 1 shows the visualization of the flavor of the inventive green tea beverage. The inventive green tea beverage is characterized in that one can perceive the sweet aroma characteristic of tea as soon as s/he puts the beverage into the mouth, then while keeping the beverage in the mouth, s/he can perceive not only the kokumi and sweetness but also clean taste of tea, and even after swallowing the beverage, s/he can perceive the afterglow of a retronasal aroma.

The tea beverage of the present invention is high in drinkability in that it is free of bitterness and astringency and has a clean taste. As referred to herein, the "drinkability" refers to the volume of a beverage consumed on a single drinking occasion. A beverage with enhanced drinkability means that it can be gulped down in large quantities for quenching ones' thirst -- in other words, one can enjoy large quantities of the tea beverage without being sated. As referred to herein, "large quantities" specifically means that the volume of a beverage consumed by an adult male on a single drinking occasion is in the range of 350 mL to 2000 mL, preferably 500 mL to 1000 mL.

Since, as described above, neutral and low-catechin tea beverages having no sweetener or acidulant added thereto can remarkably exhibit the effects of the present invention, such a neutral and low-catechin tea beverage is one of preferred modes of this invention. As referred to herein, the "sweetener" refers to a component, except for a tea extract, which is to be added for the purpose of imparting sweetness, and specific examples include sugar, glucose, fructose, isomerlized liquid sugar, glycyrrhizin, stevia, aspartame, fructooligosaccharide, and galactooligosaccharide. The "acidulant" refers to a component, except for a tea extract, which is to be added for the purpose of imparting acidity, and specific examples include fruit juices extracted from natural ingredients, as well as fumaric acid and phosphoric acid. As referred to herein, the "neutral tea beverage" refers to a tea beverage having a pH at 20°C of 5.0 to 7.0, preferably 5.5 to 7.0, more preferably 5.5 to 6.5.

### (Other components)

The green tea extract giving origin to a catechin (a) and valine (b) contains methionine (herein also referred to as "(c)"), though in trace amounts. According to the studies made by the present inventors, it was found that the presence of methionine, an amino acid known to give bitterness, interferes with the effects of valine in the present invention. Thus, it is preferred that selection of the tea leaves to be used to produce a tea extract and adjustment of extraction conditions should be made so as to reduce the content of methionine in the inventive tea beverage. More specifically, the content of methionine is adjusted to
0.1 to 4.0 ppm, based on the total amount of the tea beverage. The weight ratio of methionine to valine is
preferably not more than 5, more preferably not more than 3.

The tea beverage of the present invention can also have theanine (herein also referred to as "(d)") incorporated therein. Theanine is known as an umami component of tea, and a tea beverage having an increased theanine content has kokumi and umami. Theanine is composed of glutamic acid γ-ethylamide. L-, D-, and DL-isomers (racemic isomers) of theanine can also be used, with the L-isomer thereof being particularly preferably used. It can also be used in the form of a commercially available reagent, a pure product (a purified product with a theanine content of at least 98%), a coarsely purified product (with a theanine content of 50 to 98%), a tea extract, or a concentrate thereof.

Examples of the method for producing theanine include methods based on separation and purification from tea leaves, chemical synthesis, tissue culture using tea cells, or enzymatic reaction. The method based on enzymatic reaction is exemplified by a method in which a glutaminase is allowed to act on a glutamic acid/ethylamine mixture to obtain theanine, and the thus-obtained theanine is commercially available as "Suntheanine" (Taiyo Kagaku Co., Ltd.). The theanine obtained through enzymatic reaction is advantageously used as the (L-)theanine of this invention.

The theanine content in the tea beverage of the present invention can be determined as appropriate depending on the degree of the kokumi to be imparted to the tea beverage of interest. When theanine is contained at a concentration of not less than 10 ppm based on the total amount of the beverage, this component can remarkably exhibit its capability of suppressing a decrease in kokumi while the beverage is stored for a long time, *i.e.,* while the beverage is stored and distributed in the market in the form of being packed in a container. When theanine is present at too high a concentration, a pronounced retort odor tends to be generated by heating for heat sterilization or the like. The theanine content in this invention is generally in the range of approximately 10 to 50 ppm, preferably 12 to 40 ppm, more preferably 14 to 30 ppm.

Tea beverages in the form of being packed in a container pose a problem where there occurs a decrease in kokumi and umami as theanine is degraded during long-term storage. The change in these features is significant particularly in beverages with a light taste, like low-catechin tea beverages. According to the studies made by the present inventors, adjusting the relative ratio of methionine (c) to theanine (d) to be in a specified range suppresses a decrease in the kokumi of theanine during long-term storage. More specifically, the ratio of methionine (c) to theanine (d) ((c)/(d)) in a tea beverage is adjusted to be in the range of 0.035 to 0.200. If the (c)/(d) ratio is less than 0.035, suppression of a decrease in kokumi associated with theanine degradation will not be achieved. A (c)/(d) ratio exceeding 0.200 is also unfavorable since the smell peculiar to the sulfur-containing amino acid, methionine, will get more intense during long-term storage.

Herein disclosed are the following tea
beverages (ii) and (iii).
(ii) A packaged green tea beverage comprising the following components (a) to (d):
   (a) 50 to 400 ppm of a catechin,
   (b) 0.5 to 100 ppm of valine,
   (c) less than 5.0 ppm of methionine,
   (d) 10 to 50 ppm of theanine.
(iii) A packaged green tea beverage comprising the following components (a) to (d):
   (a) 50 to 400 ppm of a catechin,
   (b) 0.5 to 100 ppm of valine,
   (c) less than 5.0 ppm of methionine,
   (d) 10 to 50 ppm of theanine,
   and the packaged green tea beverage having a ratio (by weight) of methionine (c) to theanine (d) ((c)/(d)) in the tea beverage of 0.035 to 0.200.

The tea beverage of the present invention is characterized in that the initial aroma and lingering aroma of aroma components are enhanced by addition of valine. Thus, one can enjoy the inherent aroma of tea without addition of a flavoring agent, when and after drinking the inventive tea beverage. If a flavoring agent is added, the flavoring agent can exert its full potency, but there may occur a problem where a solvent used in the flavoring agent may affect the flavor of a low-catechin tea beverage, thereby changing the balance of the flavoring agent during heat sterilization or storage; hence, it is preferred that no flavoring agent be added to the inventive tea beverage.

The present inventors found that, in the inventive tea beverage whose retronasal aroma is significantly enhanced by incorporating a specified amount of valine, the aroma and flavor (notably the invigorating green-leaf aroma characteristic of green tea) are enhanced, and the kokumi and initial aroma is significantly improved by further incorporating a subthreshold concentration of phosphoric acid (herein also referred to as "(e)"). As referred to herein, the initial aroma refers to a perception that represents the intensity of an aroma sensed by the nose before a beverage is put into the mouth, or an aroma spreading in the oral cavity which is sensed as soon as a beverage is put into the mouth.

The "subthreshold phosphoric acid content" means that the total phosphoric acid content in a green tea beverage is in the range of 2.0 to 15 mg/100 mL, preferably 2.5 to 6.0 mg/100 mL. If the total phosphoric acid content exceeds 15 mg/100 mL, the acidity of phosphoric acid may interfere with the enhancement effect on the green-leaf aroma. Also, no expected enhancement effect may be obtained in the presence of less than 2.0 mg/100 mL of phosphoric acid.

Examples of the phosphoric acid that can be used include commercially available phosphoric acid products, synthetic phosphoric acid products, and other edible phosphoric acid products regardless of their production method. Plants and plant extracts containing phosphoric acid can also be used as they are or in a purified form (including a coarsely purified form). It is preferred that phosphoric acid be incorporated in the inventive beverage in the form of a green tea extract. Phosphoric acid is reported to be present in *Gyokuro* at higher levels than in *Sencha* (refer to Non-patent Literature 1: Tea Research Journal, no. 93, p. 26-33 (2002)). Thus, one of preferred modes of the form in which phosphoric acid is incorporated can be exemplified by a *Gyokuro* tea extract.

The present inventors demonstrated that the invigorating aroma characteristic of green tea which is enhanced by phosphoric acid comes from an aroma component(s) such as linalol, linalol oxide, geraniol, and/or phenylacetaldehyde. Thus, the green beverage comprising a subthreshold concentration of phosphoric acid comprises preferably at least one, more preferably all, of linalol, linalol oxide, geraniol and phenylacetaldehyde. In particular, a tea beverage comprising 3 to 100 ppb of linalol (herein also referred to as "(f)") is one of preferred modes of this invention.

Herein disclosed are the following tea
beverages (iv) and (v).
(iv) A packaged green tea beverage comprising the following components (a), (b) and (e):
   (a) 50 to 400 ppm of a catechin,
   (b) 0.5 to 100 ppm of valine,
   (e) 2.0 to 15 mg/100 mL of phosphoric acid.
(v) A packaged green tea beverage comprising the following components (a), (b), (e) and (f):
   (a) 50 to 400 ppm of a catechin,
   (b) 0.5 to 100 ppm of valine,
   (e) 2.0 to 15 mg/100 mL of phosphoric acid,
   (f) 3 to 100 ppb of linalol.

In the meantime, the present inventors found that, as a solution against the problem where heat treatments such as retort sterilization cause a loss or deterioration of the high-quality aroma and flavor of green tea beverages, notably low-catechin tea beverages, incorporating trace amounts of phenylacetaldehyde (g) and linalol (f) at specified concentrations enhances the aroma characteristic of tea without giving a feeling of strangeness. To be specific, subthreshold concentrations of phenylacetaldehyde (g) (0.2 to 1.0 ppb) and linalol (f) (2.8 to 10 ppb) are incorporated. In particular, incorporating these components at a relative ratio (by weight) ((f)/(g)) of 9 to 25, preferably 9 to 20, leads to an improvement in the aroma (*e.g.,* initial aroma (an aroma spreading in the oral cavity when a beverage is put into the mouth); retronasal aroma (a lingering aroma sensed after a beverage is swallowed)), taste (kokumi), and palatability (balance between taste and aroma) of tea beverages. A green tea beverage comprising these components at a ratio within the aforementioned range will be rich in sweet aroma and give a perceivable degree of full body filled with sweetness and umami. A beverage with too low a (f)/(g) ratio will lack freshness, whereas a beverage with too high a (f)/(g) ratio will be so emphasized only in terms of its floral fragrance that it may create a feeling of strangeness as a tea beverage.

The phenylacetaldehyde (g) and linalol (f) are incorporated in the tea beverage preferably in the form of a green tea extract. Incorporating these components in the form of a green tea extract imparts a more natural taste to the tea beverage. The contents of aroma components in a tea beverage can be quantified using gas chromatography with mass spectrometry (GC/MS).

Incorporating the phosphoric acid described above in such a tea beverage comprising specified amounts of phenylacetaldehyde and linalol leads to an additive or synergistic enhancement of the aroma and flavor of a low-catechin tea beverage. In this case, a preferred phosphoric acid content in a tea beverage is in the range of 1.5 to 15 mg/100 mL, more preferably 2.0 to 10 mg/100 mL, yet more preferably 2.5 to 5 mg/100 mL.

Herein disclosed are the following tea
beverages (vi) and (vii).
(vi) A packaged green tea beverage comprising the following components (a), (b), (f) and (g):
   (a) 50 to 400 ppm of a catechin,
   (b) 0.5 to 100 ppm of valine,
   (f) 2.8 to 10 ppb of linalol,
   (g) 0.2 to 1.0 ppb of phenylacetaldehyde.
(vii) A packaged green tea beverage comprising the following components (a), (b), (f) and (g):
   (a) 50 to 400 ppm of a catechin,
   (b) 0.5 to 100 ppm of valine,
   (f) 2.8 to 10 ppb of linalol,
   (g) 0.2 to 1.0 ppb of phenylacetaldehyde,
   and the packaged green tea beverage having a ratio (by weight) of linalol (f) to phenylacetaldehyde (g) ((f)/(g)) in the tea beverage of 9 to 25.

Furthermore, the present inventors found that incorporating specified concentrations of particular oligosaccharides in a low-catechin tea beverage not only results in a significant enhancement in kokumi and umami, leading to an improvement in drinkability, but also works well for suppression of a retort odor significantly perceived in a low-catechin tea beverage. More specifically, a tea beverage that comprises the trisaccharide raffinose (herein also referred to as "(h)") represented by the following formula (1): 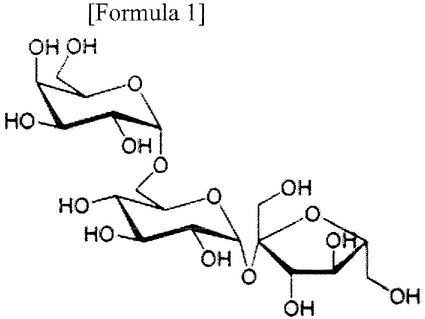 and the tetrasaccharide stachyose (herein also referred to as "(i)") represented by the following formula (2):

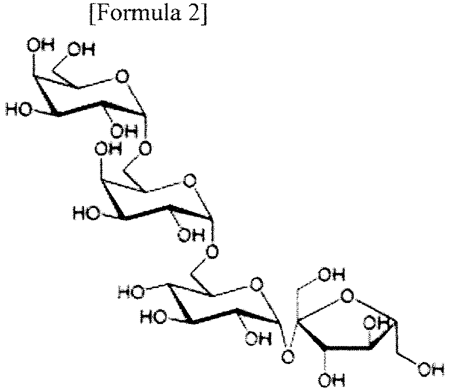

and which has a total amount by weight of raffinose and stachyose ((h + i)) of not less than 10 ppm, preferably not less than 15 ppm, more preferably not less than 20 ppm, particularly preferably not less than 30 ppm, and at most about 100 ppm, can show an improvement in drinkability while maintaining the clean taste of a low-catechin tea beverage.

Hence, providing the inventive tea beverage having drinkability improved by incorporating a specified amount of valine, in a mode in which specified concentrations of the aforementioned oligosaccharides are further added, leads to an additive or synergistic improvement of the drinkability of a low-catechin tea beverage. In other words, the addition of these oligosaccharides yields a preferred green tea beverage imparted with initial aroma, lingering aroma, kokumi, and umami, and having a selectively enhanced sweet aroma of tea. It is preferred that in this tea beverage, the content of raffinose (h) be lower than that of stachyose (i), *i.e.,* the following relationship (h) ≤ (i) be satisfied. When the content of stachyose is higher, there can be produced a tea beverage characterized by being imparted with sweet aroma and kokumi, and by giving a superior aroma and flavor both in a refrigerated state and in a lukewarm state at normal temperature.

The ratio of the total weight of raffinose and stachyose to that of a catechin (a) ((h+i)/a) is preferably not less than 0.04, more preferably not less than 0.06, yet more preferably not less than 0.08, particularly preferably not less than 0.10. When the relative ratio of the oligosaccharides is high with respect to a catechin, bitterness and astringency can further be reduced, and a clean taste can be added. Raffinose and stachyose are preferably incorporated in the form of a plant extract, more preferably a tea leaf (notably green tea leaf) extract.

Herein disclosed are the following tea
beverages (viii) and (ix).
(viii) A packaged green tea beverage comprising the following components (a), (b), (h) and (i):
   (a) 50 to 400 ppm of a catechin,
   (b) 0.5 to 100 ppm of valine,
   (h) raffinose,
   (i) stachyose,
   and the packaged green tea beverage having a total amount of the raffinose and the stachyose ((h)+(i)) in the tea beverage of 10 to 100 ppm.

### (Packaged green tea beverage)

The tea beverage of the present invention, which comprises a specified amount of valine and optionally additional components, exhibits its capability to suppress an uncomfortable retort odor that would be generated in a packaged tea beverage produced through heat sterilization, and thus is advantageously provided in the form of a packaged tea beverage. Like in the case of common beverages, the container to be used for the inventive tea beverage can be provided in common forms, including polyethylene terephthalate-based molded containers (*i.e.,* PET bottles), metal cans, paper containers combined with metallic foils or plastic films, and glass bottles.

The tea beverage of the present invention is so drinkable that it can be gulped down in large quantities, and the volume of the inventive beverage is in the range of 350 mL to 1000 mL, preferably 500 mL to 1000 mL.

Also, the inventive tea beverage has full body filled with a sweet aroma and umami, and can be enjoyed both in a cold state and at normal temperature (in a lukewarm state); thus, the inventive beverage is suitable for being packed in a recappable PET bottle which allows leftovers to be preserved, and for being drunk little by little over a long period of time in the office or the like.

### (Production method)

The tea beverage of the present invention can be produced by a production method comprising the steps of, for example:
(1) impregnating green tea leaves with an aqueous solution containing valine and then drying the impregnated tea leaves by roasting to obtain valine-rich tea leaves,
(2) mixing the valine-rich tea leaves with additional green tea leaves to prepare mixed tea leaves,
(3) subjecting the mixed tea leaves to extraction treatment to give a liquid preparation, and
(4) sterilizing the liquid preparation by heating.

Alternatively, the inventive tea beverage can also be produced by a method comprising the steps of:
(1) impregnating green tea leaves with an aqueous solution containing valine and then drying the impregnated tea leaves by roasting to obtain valine-rich tea leaves,
(2) subjecting the valine-rich tea leaves to extraction treatment to give a liquid valine extract,
(3) subjecting additional green tea leaves to extraction treatment to give a liquid green tea extract,
(4) mixing the liquid valine extract with the liquid green tea extract to give a liquid preparation, and
(5) sterilizing the liquid preparation by heating.

In both of these production methods, performing the extraction treatment at low temperatures is preferable for producing a low-catechin tea beverage. To be specific, the extraction treatment is carried out at approximately not higher than 60°C, preferably 10 to 60°C, more preferably 15 to 55°C.

In the case where the inventive beverage is to be packed in such containers as metal cans, which permit post-packaging heat sterilization, the heat sterilization is done under the sterilization conditions specified in the Food Sanitation Act. In the case where the inventive beverage is to be packed in such containers as PET bottles and paper containers, which do not permit retort sterilization, sterilization is done under the same sterilization conditions as noted above before packaging; for example, the beverage is sterilized at a high temperature for a short time using a plate-type heat exchanger or the like, and then cooled to a specified temperature and packed in such a container.

### EXAMPLES

Hereunder, the present invention will be specifically described in detail by way of experimental and working examples, but the invention is not limited to these examples.

### Example 1

A commercially available *Sencha* tea beverage (with a catechin content of 800 ppm) packed in a PET bottle was diluted with water to obtain a low-catechin tea beverage with a catechin content of 300 ppm (No.1; reference example). To the resultant beverage, L-valine (Ajinomoto Healthy Supply Co., Inc.) was added according to the recipes shown in Table 1 to prepare different beverages (Nos. 2 to 6, No. 6 is a refernce example). After sterilized by heating under the sterilization conditions pursuant to the Food Sanitation Act, 500 mL each of the beverages were packed in PET bottles, capped and sealed to thereby obtain packaged green tea beverages. These packaged green tea beverages were quantified for their concentrations of catechin and amino acids (valine, methionine, theanine). The analysis conditions were as follows.

### (Catechin determination)

The tea beverages as samples were passed through a filter (0.45 µm) and subjected to HPLC analysis. The HPLC analysis conditions were as follows.
- HPLC system: TOSOH HPLC system LC8020 model II
- Column: TSKgel ODS80T sQA (4.6 mm × 150 mm)
- Column temperature: 40°C
- Mobile phase A: Water/acetonitrile/trifluoroacetic acid (90:10:0.05)
- Mobile phase B: Water/acetonitrile/trifluoroacetic acid (20:80:0.05)
- Detection: UV 275 nm
- Injection volume: 20 µL
- Flow rate: 1 mL/min.
- Gradient program:

| Time (min) | %A | %B |
|---|---|---|
| 0 | 100 | 0 |
| 5 | 92 | 8 |
| 11 | 90 | 10 |
| 21 | 90 | 10 |
| 22 | 0 | 100 |
| 29 | 0 | 100 |
| 30 | 100 | 0 |

- Reference materials: Catechin, epicatechin, gallocatechin, epigallocatechin, catechin gallate, epicatechin gallate, gallocatechin gallate, and epigallocatechin gallate (high-purity reagents produced by Kurita Analysis Service Co., Ltd.)

### (Determination of amino acids)

The determination of amino acids was also made using the HPLC method. The HPLC analysis conditions were as follows.
- HPLC system: Waters amino acid analyzer 2695
- Column: AccQ-Tag column (3.9 mm × 150 mm)
- Column temperature: 40°C
- Mobile phase A: AccQ-TagA (pH 5.8)
- Mobile phase B: Acetonitrile
- Mobile phase C: Water/methanol = 9/1
- Detection: EX, 250 nm; EM, 395 nm; Gain, 100
- Injection volume: 5 µL
- Gradient program:

| Time (min) | Flow rate (mL/min) | %A | %B | %C |
|---|---|---|---|---|
| 0 | 1 | 100 | 0 | 0 |
| 1 | 1 | 99 | 1 | 0 |
| 16 | 1 | 97 | 3 | 0 |
| 25 | 1 | 94 | 6 | 0 |
| 35 | 1 | 86 | 14 | 0 |
| 40 | 1 | 86 | 14 | 0 |
| 50 | 1 | 82 | 18 | 0 |
| 51 | 1 | 0 | 60 | 40 |
| 54 | 1 | 100 | 0 | 0 |
| 75 | 1 | 0 | 60 | 40 |
| 110 | 0 | 0 | 60 | 40 |

- Reference materials: Amino acids (valine, methionine, theanine)

### (Sensory evaluation)

The tea beverages were subjected to a drinking test made by five panelists. The evaluation was done regarding clean taste, retronasal aroma, kokumi and bitterness, under the criteria detailed below. In this connection, the "retronasal aroma" refers to an aroma passing through the mouth to the nose in the afterglow of flavor lingering after a beverage is swallowed.

### [Evaluation criteria]

5: excellent, 4: good, 3: moderate, 2: not good, and 1: bad. The rated scores were averaged.

### [Overall rating]

⊚: very favorable, ○: favorable, Δ: moderate, ×: unfavorable. The result for each of the beverages was indicated by the rating given by the largest number of panelists.

### (Evaluation results)

The results are shown in Table 1. When valine was incorporated at concentrations of approximately 0.5 to 100 ppm, retronasal aroma and kokumi were successfully enhanced almost without giving a feeling of bitterness, while the clean taste of a low-catechin tea beverage was maintained.

**[Table 1]**

| | No.1 * | No.2 | No.3 | No.4 | No.5 | No.6 * |
|---|---|---|---|---|---|---|
| Catechin (a) [ppm] | 300 | 300 | 300 | 300 | 300 | 300 |
| Valine (b) [ppm] | 0.3 | 0.5 | 1 | 10 | 90 | 110 |
| Methionine (c) [ppm] | 3.8 | 3.8 | 3.8 | 3.8 | 3.8 | 3.8 |
| Theanine (d) [ppm] | 12.5 | 12.5 | 12.5 | 12.5 | 12.5 | 12.5 |
| (c)/(d) | 0.304 | 0.304 | 0.304 | 0.304 | 0.304 | 0.304 |
| Clean taste | 4.0 | 3.9 | 3.9 | 3.9 | 3.7 | 2.2 |
| Retronasal aroma | 1.8 | 3.3 | 3.5 | 3.7 | 4.0 | 4.1 |
| Kokumi typical of tea | 2.1 | 3.3 | 3.5 | 3.8 | 4.0 | 4.1 |
| Bitterness | 3.9 | 3.7 | 3.7 | 3.2 | 2.8 | 1.0 |
| Overall rating | × | ○ | ⊚ | ⊚ | ○ | × |

| | | | | | | |
|---|---|---|---|---|---|---|
| *)reference | | | | | | |

### Example 2

The low-catechin tea beverage No. 4 produced in Example 1 was further diluted with water 2 to 7 times, and to the resultant mixture, the same type of valine as used in Example 1 was added to follow the recipes shown in Table 3, and the prepared beverages were evaluated for their drinkability. The evaluation was made by five specialized panelists under the following criteria regarding drinkability: ⊚: very good, ○: good, Δ: moderate, ×: bad. The result for each of the beverages was indicated by the rating given by the largest number of panelists.

The results are shown in Table 2. The tea beverage with a catechin content of not more than 50 ppm (No. 7; reference example), even though a specified amount of valine was added, did not show an enhancement effect on kokumi and retronasal aroma, and was light and watery in taste. The low-catechin tea beverages with a catechin content of not less than 50 ppm (Nos. 12 to 16) were rated by all the panelists as improved in terms of drinkability by the addition of valine.

**[Table 2]**

| | No.7 * | No.8 | No.9 | Nο.10 | No.11 | No.12 |
|---|---|---|---|---|---|---|
| Catechin (a) [ppm] | 43 | 50 | 60 | 75 | 100 | 150 |
| Valine (b) [ppm] | 1.4 | 1.7 | 2.0 | 2.5 | 3.3 | 5.0 |
| Methionine (c) [ppm] | 0.5 | 0.6 | 0.8 | 1.0 | 1.3 | 1.9 |
| Drinkability | × | ○ | ○ | ⊚ | ⊚ | ⊚ |

| | | | | | | |
|---|---|---|---|---|---|---|
| *) reference | | | | | | |

### Example 3

To the low-catechin tea beverage No. 4 produced in Example 1, methionine (Ajinomoto Healthy Supply Co., Inc.) was added to follow the recipes (Nos. 13 to 14) shown in Table 3, and the prepared beverages were evaluated for their drinkability. The evaluation was made by five specialized panelists under the following criteria: ○: superior to the beverage No. 4, Δ: comparable to the beverage No. 4, and ×: inferior to the beverage No. 4. The result for each of the beverages was indicated by the rating given by the largest number of panelists.

The results are shown in Table 3. It was found that addition of methionine tends to interfere with the improvement effects of valine on the aroma and flavor of a low-catechin tea beverage. As compared to the beverage No. 4 in terms of drinkability, the beverage No. 13 was rated as not much different by three of the five panelists, but the beverages Nos. 14 and 15, which contained methionine at concentrations exceeding 5 ppm based on the total amount of the beverage, were rated by all the panelists as apparently inferior in drinkability and as giving only a slightly perceivable degree of kokumi and retronasal aroma. This suggested that it is desirable to adjust the methionine concentration to not more than 5 ppm, preferably not more than 4 ppm, in a valine-containing beverage.

**[Table 3]**

| | No.4 | No.13 | No.14 | No.15 |
|---|---|---|---|---|
| Catechin (a) [ppm] | 300 | 300 | 300 | 300 |
| Valine (b) [ppm] | 10 | 10 | 10 | 10 |
| Methionine (c) [ppm] | 3.8 | 5 | 6 | 7 |
| Theanine (d) [ppm] | 12.5 | 12.5 | 12.5 | 12.5 |
| Drinkability | - | Δ | × | × |

### Example 4

### (1) Production of valine-rich tea leaves

Valine-rich tea leaves were produced according to the procedure described in Example 2 of Japanese Patent Application Publication No. JP 2012-183064. First, an amino acid-rich tea extract was prepared. 10 g of green tea leaves (moderately roasted) were put in a closed container quipped with an agitator, and 180 mL of ion exchange water at 40°C was added to soak the green tea leaves. To the liquid was added 0.2 g of a protease preparation ("Kokulase P" produced by Mitsubishi-Kagaku Foods Corporation), and with the temperature kept at 40°C, the mixture was stirred for 16 hours to perform enzymatic treatment. Thereafter, the resulting enzymatically treated liquid was heated at 90°C for 10 minutes to inactivate the enzyme, whereupon a liquid enzymatic extract was obtained. The thus-obtained liquid extract was analyzed for its amino acids constitution under the HPLC conditions described in Example 1. The results of the analysis are shown in Table 4. The liquid extract was concentrated under reduced pressure such that the total concentration of the 17 types of amino acids listed in Table 4 was 1%, whereby a valine-containing liquid green tea concentrate was prepared.

**[Table 4]**

| | Asp | Glu | Ser | Gly | His | Arg | Thr | Ala | Pro |
|---|---|---|---|---|---|---|---|---|---|
| Mg/L | 51.1 | 76.0 | 40.1 | 17.6 | 27.1 | 141.9 | 41.2 | 46.6 | 48.8 |

| | Theanine | Tyr | Val | Met | Ile | Leu | Lys | Phe | |
|---|---|---|---|---|---|---|---|---|---|
| Mg/L | 175.8 | 82.2 | 49.8 | 95.2 | 36.1 | 112.4 | 57.8 | 97.4 | |

Unroasted green tea leaves (crude *Yabukita* tea leaves picked in the third round of the season) were sprayed and impregnated by stirring with the valine-containing liquid green tea concentrate at a weight ratio of tea leaves to valine-containing concentrate of 1:0.2. Thereafter, the tea leaves were dried by roasting under the following conditions to give valine-rich tea leaves.
- Roasting machine: TR-10 produced by Terada Seisakusho., Ltd.
- Drum temperature: 200°C
- Drum speed: 12 rpm
- Roasting time: 15 to 20 min
- Roasting temperature: 150°C

### (2) Production of a packaged green tea beverage

The valine-rich tea leaves obtained above in (1) and *Sencha* tea leaves (picked in the first round of the season) were mixed at a weight ratio of 5:95 to give mixed tea leaves. The mixed tea leaves were subjected to extraction treatment with about 30 times as much water (40°C). After adjustment of the pH to 6.4 using a pH adjustor, followed by heat sterilization, 500 mL of the beverage was packed in a PET bottle, whereby a packaged green tea beverage was produced.

The resultant beverage was quantified for its contents of catechin and amino acids (valine, methionine) and also subjected to a sensory evaluation.

The results are shown in Table 5. The produced green tea beverage was highly drinkable in that it had a reduced retort odor, and a satisfactory aroma and flavor as shown in FIG. 1. Even when the beverage stored in a refrigerated state was left to stand at normal temperature and then drunk in a lukewarm state, this beverage had a sweet aroma and kokumi as well as a retronasal aroma, and thus maintained its clean taste even in a lukewarm state.

**[Table 5]**

| | Green tea beverage |
|---|---|
| Catechin (a) [ppm] | 305 |
| Valine (b) [ppm] | 7.9 |
| Methionine (c) [ppm] | 0.9 |
| Theanine (d) [ppm] | 20 |
| Clean taste | 4.8 |
| Retronasal aroma | 4.4 |
| Kokumi typical of tea | 4.2 |
| Bitterness | 1.8 |
| Overall rating | ⊚ |

### Example 5

To the low-catechin tea beverage No.2 (control) produced in Example 1, theanine (Suntheanine U001 produced by Taiyo Kagaku Co., Ltd.) was added to prepare packaged green tea beverages with different theanine/methionine ratios (Nos. 16 to 20). These beverages were quantified for their concentrations of catechin and amino acids (theanine, methionine, valine). Also, the beverages were also subjected to a drinking test made by five panelists. The evaluation was made under the following criteria regarding kokumi and bitter/peculiar taste.

### [Evaluation criteria]

5: significantly superior to the control, 4: more favorable than the control, 3: comparable to the control, 2: less favorable to the control, and 1: inferior to the control. The rated scores were averaged.

### [Overall rating]

⊚: significantly more favorable than the control, ○: more favorable than the control, Δ: comparable to the control, ×: less favorable than the control. The result for each of the beverages was indicated by the rating given by the largest number of panelists.

Also, the prepared beverages, after stored at 37°C for 4 weeks, were evaluated for their savor under the following criteria, with each of those beverages stored at 5°C for 4 weeks being used as a control: ○: comparable to the control, and ×: inferior to the control. The result for each of the beverages was indicated by the rating given by the largest number of panelists.

### (Evaluation results)

The results are shown in Table 6. The beverages (Nos. 16 to 18), which were produced by adding theanine at concentrations of not more than 50 ppm to a beverage comprising valine at concentrations of about 0.5 to 100 ppm based on the total amount of the beverage, showed a further enhancement in kokumi while maintaining the clean taste of a low-catechin tea beverage, and were also satisfactory in savor. The beverages (Nos. 19, 20) having theanine added thereto at concentrations exceeding 50 ppm gave a slight feeling of a retort odor caused by heat sterilization, and were rated as inferior in clean taste to the control beverage. Further, it was suggested that there is less change in savor during long-term storage at normal temperature, when the ratio of methionine (c) to theanine (d) ((c)/(d)) in a tea beverage is adjusted to be in the range of 0.035 to 0.200.

**[Table 6]**

| | No.2 | No.16 | No.17 | No.18 | No.19 | No.20 |
|---|---|---|---|---|---|---|
| Catechin (a) [ppm] | 300 | 300 | 300 | 300 | 300 | 300 |
| Valine (b) [ppm] | 0.5 | 0.5 | 0.5 | 0.5 | 0.5 | 0.5 |
| Methionine (c) [ppm] | 3.8 | 3.8 | 3.8 | 3.8 | 3.8 | 3.8 |
| Theanine (d) [ppm] | 12.5 | 19.0 | 25.0 | 50.0 | 100.0 | 130.0 |
| (c)/(d) | 0.304 | 0.200 | 0.152 | 0.076 | 0.038 | 0.029 |
| Clean taste | 3.9 | 3.9 | 3.9 | 3.8 | 3.2 | 2.6 |
| Retronasal aroma | 3.3 | 3.5 | 3.7 | 3.5 | 3.0 | 3.0 |
| Kokumi typical of tea | 3.3 | 4.0 | 4.2 | 3.5 | 3.2 | 4.0 |
| Bitterness | 3.7 | 3.8 | 4.0 | 4.0 | 3.5 | 3.7 |
| Overall rating | - | ⊚ | ⊚ | ○ | Δ | Δ |
| Flavor after storage | × | ○ | ○ | ○ | ○ | × |

### Example 6

To the low-catechin tea beverage No. 17 produced in Example 5, valine was added in the same manner as in Example 1 to thereby prepare different packaged green tea beverages. The prepared beverages were analyzed and evaluated in the same manner as in Example 1. The results are shown in Table 7. The addition of valine at concentrations of not more than 100 ppm based on the total amount of the beverage led to an enhancement in not only kokumi but also retronasal aroma.

**[Table 7]**

| | No.17 | No.21 | No.22 | No.23 * |
|---|---|---|---|---|
| Catechin (a) [ppm] | 300 | 300 | 300 | 300 |
| Valine (b) [ppm] | 0.5 | 1.0 | 90 | 110 |
| Methionine (c) [ppm] | 3.8 | 3.8 | 3.8 | 3.8 |
| Theanine (d) [ppm] | 25.0 | 25.0 | 25.0 | 25.0 |
| (c)/(d) | 0.152 | 0.152 | 0.152 | 0.152 |
| Clean taste | 4.3 | 4.2 | 4.1 | 3.2 |
| Initial aroma | 4.3 | 4.2 | 4.1 | 4.0 |
| Retronasal aroma | 3.8 | 4.5 | 4.7 | 4.7 |
| Kokumi typical of tea | 3.5 | 4.5 | 4.7 | 4.8 |
| Bitter/peculiar taste (bad smell) | 4.0 | 3.8 | 3.0 | 1.0 |
| Overall rating | ○ | ⊚ | ⊚ | × |

| | | | | |
|---|---|---|---|---|
| *) reference | | | | |

### Example 7

To a commercially available *Sencha* tea beverage containing the aroma components, linalol and phenylacetaldehyde, and packed in a PET bottle (No. 24; control) (with a catechin content of 360 ppm), valine was added in the same manner as in Example 1 to prepare a beverage containing 0.5 ppm of valine (No. 25). To the resultant beverage, phosphoric acid was added dropwise at concentrations of 0 to 18.1 mg/100 mL to prepare green tea beverages (Nos. 26 to 30) with different phosphoric acid concentrations as shown in Table 1. The beverages produced in this example were .quantified for their concentrations of catechin and amino acids in the same manner as in Example 1. These beverages were also analyzed for their concentrations of phosphoric acid and aroma components (linalol and phenylacetaldehyde) according to the procedures described below.

### (Determination of phosphoric acid concentration)

The quantification of the beverages for their phosphoric acid concentration was made using an Agilent capillary electrophoresis system (HPCE).

### (Determination of aroma components)

The aroma components of the tea beverages were analyzed using gas chromatography with mass spectrometry (GC/MS) and quantified using the standard addition method. Pretreatment was conducted employing the SBSE (Stir Bar Sorptive Extraction) method: stirring was performed with a Twister (a stir bar coated with polydimethylsiloxane; produced by GERSTEL K.K.) to adsorb and concentrate the components of interest. The analysis samples were adjusted as follows: sample volume: 50 mL, adsorption temperature: 25°C (room temperature), and adsorption time: 120 min. The analysis conditions were as follows.

### TDS (Thermo Desorption System) conditions:

- System: GERSTEL TDS
- Desorption temperature: 35°C (1 min) to 250°C (60°C/min, held for 5 min)
- Inlet temperature: -90°C to 250°C (10°C/sec, held for 5 min)

### GC/MS conditions:

- System: Agilent GC 6890, MSD 5973N
- Column: Inert Cap pure-WAX (30 m × 0.25 mm I.D. × 0.25 µm film thickness)
- Column temperature: 40°C (5 min) to 260°C (10°C/min, held for 13 min)
- Splitless: 5 min
- Column flow rate: 1.2 mL/min
- Transfer line temperature: 260°C
- Ion source temperature: 230°C
- Quadrupole temperature: 150°C
- Ion used for quantification: phenylacetaldehyde (m/z = 91)

### (Sensory evaluation)

Further, the beverages were subjected to a drinking test made by five panelists. The evaluation was made under the following criteria regarding initial aroma, retronasal aroma, and kokumi.

### [Evaluation criteria]

5: significantly superior to the control, 4: more favorable than the control, 3: comparable to the control, 2: less favorable to the control, and 1: inferior to the control. The rated scores were averaged.

### [Overall rating]

⊚: significantly more favorable than the control, ○: more favorable than the control, Δ: comparable to the control, ×: less favorable than the control. The result for each of the beverages was indicated by the rating given by the largest number of panelists.

### (Evaluation results)

The results are shown in Table 8. The green tea beverages produced by incorporating 2.5 to 15 mg/100 mL (preferably 2.5 to 6.0 mg/100 mL) of phosphoric acid in a low-catechin tea beverage comprising about 0.5 to 100 ppm of valine were intense in the invigorating green-leaf aroma characteristic of green tea, and free of bitterness, astringency, and harshness, and had a refreshing taste. A green tea beverage containing not less than 20 mg/100 mL of phosphoric acid was too intense in acidity to be suitable as a tea beverage.

**[Table 8]**

| | No. 24* | No.25 | No.26 | No.27 | No.28 | No.29 | No.30 |
|---|---|---|---|---|---|---|---|
| Catechin (a) [ppm] | 360 | 360 | 360 | 360 | 360 | 360 | 360 |
| Valine (b) [ppm] | 0.3 | 0.5 | 0.5 | 0.5 | 0.5 | 0.5 | 0.5 |
| Methionine (c) [ppm] | 4.0 | 4.0 | 4.0 | 4.0 | 4.0 | 4.0 | 4.0 |
| Theanine (d) [ppm] | 8.2 | 8.2 | 8.2 | 8.2 | 8.2 | 8.2 | 8.2 |
| (c)/(d) | 0.488 | 0.488 | 0.488 | 0.488 | 0.488 | 0.488 | 0.488 |
| Phosphoric acid (e) [mg/100mL] | 1.9 | 1.9 | 2.5 | 3.0 | 6.0 | 12.0 | 20.0 |
| Linalol (f) [ppb] | 2.8 | 2.8 | 2.8 | 2.8 | 2.8 | 2.8 | 2.8 |
| Phenylacetaldehyde (g) [ppb] | 0.1 | 0.1 | 0.1 | 0.1 | 0.1 | 0.1 | 0.1 |
| Initial aroma | - | 3.1 | 4.3 | 4.3 | 4.4 | 4.5 | 3.2 |
| Retronasal aroma | - | 4.0 | 4.1 | 4.1 | 4.1 | 4.1 | 4.0 |
| Kokumi typical of tea | - | 3.5 | 4.0 | 4.1 | 3.6 | 3.5 | 2.8 |
| Overall rating | - | ○ | ⊚ | ⊚ | ⊚ | ○ | Δ |

| | | | | | | | |
|---|---|---|---|---|---|---|---|
| *) reference | | | | | | | |

### Example 8

To the green tea beverage No.27 produced in Example 7, 2.2 to 107.2 ppb of linalol was added dropwise, and the resultant beverages (Nos. 31 to 33) were evaluated for their aroma and flavor. The evaluation was made by five specialized panelists under the following criteria: ○: superior to the beverage No. 27, Δ: comparable to the beverage No. 27, and ×: inferior to the beverage No. 27. The result for each of the beverages was indicated by the rating given by the largest number of panelists.

The results are shown in Table 9. The beverages containing linalol at concentrations ranging from 3 to 100 ppb showed an enhancement in aroma, gave a strongly perceivable degree of residual aroma (a lingering aroma sensed after a beverage was swallowed) and retronasal aroma. However, those beverages tended to have a slightly artificial savor, per se, which is quite different from the natural savor of tea. Considering the results of this example, together with those of Example 7, it can be concluded that it is preferable not to add a flavoring agent to a beverage containing a specified amount of valine, and that addition of a specified amount of phosphoric acid is useful to enhance the inherent savor of tea in a natural way.

**[Table 9]**

| | No.27 | No.31 | No.32 | No.33 |
|---|---|---|---|---|
| Catechin (a) [ppm] | 360 | 360 | 360 | 360 |
| Valine (b) [ppm] | 0.5 | 0.5 | 0.5 | 0.5 |
| Methionine (c) [ppm] | 4.0 | 4.0 | 4.0 | 4.0 |
| Theanine (d) [ppm] | 8.2 | 8.2 | 8.2 | 8.2 |
| (c)/(d) | 0.488 | 0.488 | 0.488 | 0.488 |
| Phosphoric acid (e) [mg/100mL] | 3.0 | 3.0 | 3.0 | 3.0 |
| Linalol (f) [ppb] | 2.8 | 5.0 | 90.0 | 110.0 |
| Phenylacetaldehyde (g) [ppb] | 0.1 | 0.1 | 0.1 | 0.1 |
| Drinking test | - | ○ | ○ | Δ |

### Example 9

To the green tea beverage No. 25 produced in Example 7 (control), phenylacetaldehyde was added to prepare green tea beverages with different phenylacetaldehyde contents (Nos. 31 to 33), and these beverages were subjected to a drinking test made by five panelists. The evaluation was made under the following criteria regarding initial aroma, retronasal aroma, and kokumi.

### [Evaluation criteria]

5: significantly superior to the control, 4: more favorable than the control, 3: comparable to the control, 2: less favorable to the control, and 1: inferior to the control. The rated scores were averaged.

### [Overall rating]

⊚: significantly more favorable than the control, ○: more favorable than the control, Δ: comparable to the control, ×: less favorable than the control. The result for each of the beverages was indicated by the rating given by the largest number of panelists.

The results are shown in Table 10. The control beverage (No. 25) containing less than 0.2 ppb of phenylacetaldehyde was rated by some panelists as weak in aroma and slightly watery in taste, but the green tea beverages (Nos. 31 to 33) containing phenylacetaldehyde at concentrations ranging from 0.2 to 1.0 ppb showed an enhancement in the aroma characteristic of tea (e.g., initial aroma (an aroma spreading in the oral cavity when a beverage is put into the mouth); retronasal aroma (a lingering aroma sensed after a beverage is swallowed)) without giving a feeling of strangeness. In particular, those beverages containing linalol (f) and phenylacetaldehyde (g) at a ratio (by weight) ((f)/(g)) of 9 to 20 were rich in sweet aroma and gave a perceivable degree of full body filled with sweetness and umami. The beverage (No. 33) with a (f)/(g) ratio of less than 9 was lacking in fresh aroma, as compared to the beverages Nos. 31 and 32.

**[Table 10]**

| | No.25 | No.31 | No.32 | No.33 |
|---|---|---|---|---|
| Catechin (a) [ppm] | 360 | 360 | 360 | 360 |
| Valine (b) [ppm] | 0.5 | 0.5 | 0.5 | 0.5 |
| Methionine (c) [ppm] | 4.0 | 4.0 | 4.0 | 4.0 |
| Theanine (d) [ppm] | 8.2 | 8.2 | 8.2 | 8.2 |
| (c)/(d) | 0.488 | 0.488 | 0.488 | 0.488 |
| Phosphoric acid (e) [mg/100mL] | 1.9 | 1.9 | 1.9 | 1.9 |
| Linalol (f) [ppb] | 2.8 | 2.8 | 2.8 | 2.8 |
| Phenylacetaldehyde (g) [ppb] | 0.1 | 0.2 | 0.3 | 0.5 |
| (f)/(g) | 28 | 14 | 9.3 | 5.6 |
| Initial aroma | - | 3.5 | 3.6 | 4.0 |
| Retronasal aroma | - | 4.0 | 4.0 | 3.6 |
| Kokumi typical of tea | - | 3.6 | 3.6 | 3.1 |
| Overall rating | - | ○ | ○ | Δ |

### Example 10

To the green tea beverage (No. 33) produced in Example 9, linalol was added to prepare green tea beverages with different linalol contents (Nos. 34 to 37). These green tea beverages were evaluated in the same manner as in Example 9, with the green tea beverage No. 25 being used as a control.

The results are shown in Table 11. The green tea beverages containing linalol (f) at concentrations ranging from 0.2 to 1.0 ppb, and phenylacetaldehyde (g) at concentrations ranging from 2.8 to 10.0 ppb, and having a (f)/(g) ratio of 9 to 20, were highly drinkable in that they had a floral fragrance so that one can keep drinking them even in a lukewarm state while feeling refreshed.

**[Table 11]**

| | No.25 | No.33 | No.34 | No.35 | No.36 | No.37 |
|---|---|---|---|---|---|---|
| Catechin (a) [ppm] | 360 | 360 | 360 | 360 | 360 | 360 |
| Valine (b) [ppm] | 0,5 | 0.5 | 0.5 | 0.5 | 0.5 | 0.5 |
| Methionine (c) [ppm] | 4.0 | 4.0 | 4.0 | 4.0 | 4.0 | 4.0 |
| Theanine (d) [ppm] | 8.2 | 8.2 | 8.2 | 8.2 | 8.2 | 8.2 |
| (c)/(d) | 0.488 | 0.488 | 0.488 | 0.488 | 0.488 | 0.488 |
| Phosphoric acid (e) [mg/100mL] | 1.9 | 1.9 | 1.9 | 1.9 | 1.9 | 1.9 |
| Linalol (f) [ppb] | 2.8 | 2.8 | 5.0 | 7.5 | 10.0 | 20.0 |
| Phenylacetaldehyde (g) [ppb] | 0.1 | 0.5 | 0.5 | 0.5 | 0.5 | 0.5 |
| (f)/(g) | 28 | 5.6 | 10 | 15 | 20 | 40 |
| Initial aroma | - | 4.0 | 4.6 | 4.6 | 4.6 | 2.8 |
| Retronasal aroma | - | 3.6 | 4.0 | 4.1 | 4.0 | 3.6 |
| Kokumi typical of tea | - | 3.1 | 3.6 | 3.6 | 3.6 | 3.1 |
| Overall rating | - | Δ | ○ | ○ | ○ | Δ |

### Example 11

To the control beverage produced in Example 7 (No. 25; containing 7.0 ppm of raffinose and 2.8 ppm of stachyose), Beet Oligosaccharide (with at least 98% raffinose content; produced by Nichiei, K.K.) was added, and the resultant mixtures were sterilized by heating in the same manner as in Example 1 to prepare packaged green tea beverages with different oligosaccharide constitutions and concentrations (Nos. 38 to 40). These tea beverages were subjected to a drinking test made by five panelists. The evaluation was made under the following criteria, regarding clean taste, initial aroma, retronasal aroma, kokumi typical of tea, and bitterness.

### [Evaluation criteria]

5: significantly superior to the control, 4: more favorable than the control, 3: comparable to the control, 2: less favorable to the control, and 1: inferior to the control. The rated scores were averaged.

### [Overall rating]

⊚: significantly more favorable than the control, ○: more favorable than the control, Δ: comparable to the control, ×: less favorable than the control. The result for each of the beverages was indicated by the rating given by the largest number of panelists.

The results are shown in Table 12. The tea beverages comprising raffinose and stachyose in a total amount of 10 to 100 ppm did not have an offensive taste in themselves, maintained the clean taste characteristic of low-catechin tea beverages, and showed an enhancement in retronasal aroma and kokumi. In particular, the tea beverages having a ratio of the total weight of raffinose and stachyose to a catechin (a) (((h)+(i))/(a)) of not less than 0.04 were superior in aroma and flavor even in a lukewarm state at normal temperature.

**[Table 12]**

| | No.25 | No.38 | No.39 | No.40 |
|---|---|---|---|---|
| Catechin (a) [ppm] | 360 | 360 | 360 | 360 |
| Valine (b) [ppm] | 0.5 | 0.5 | 0.5 | 0.5 |
| Methionine (c) [ppm] | 4.0 | 4.0 | 4.0 | 4.0 |
| Theanine (d) [ppm] | 8.2 | 8.2 | 8.2 | 8.2 |
| (c)/(d) | 0.488 | 0.488 | 0.488 | 0.488 |
| Phosphoric acid (e) [mg/100mL] | 1.9 | 1.9 | 2.5 | 3.0 |
| Raffinose (h) [ppm] | 7.0 | 12.0 | 90.0 | 110.0 |
| Stachyose (i) [ppm] | 2.8 | 2.8 | 2.8 | 2.8 |
| (h)+(i) | 9.8 | 14.8 | 92.8 | 113.8 |
| ((h)+(i))/(a) | 0.027 | 0.041 | 0.258 | 0.316 |
| Clean taste | - | 3.6 | 3.6 | 1.8 |
| Retronasal aroma | - | 3.2 | 3.3 | 2.0 |
| Kokumi typical of tea | - | 3.5 | 3.8 | 2.5 |
| Bitterness | - | 3.8 | 4.5 | 4.8 |
| Overall rating | - | ○ | ⊚ | Δ |

## Claims

1. A packaged green tea beverage comprising the following components (a) to (c):
(a) 50 to 400 ppm of a catechin,
(b) 0.5 to 100 ppm of valine,
(c) 0.1 to 4.0 ppm of methionine.

2. The beverage according to claim 1, comprising 1.0 to 90 ppm of valine.

3. The beverage according to claim 1 or 2, further comprising (f) 2.8 to 10 ppb of linalol and (g) 0.2 to 1.0 ppb of phenylacetaldehyde.

4. The beverage according to any one of claims 1 to 3, wherein the weight ratio of methionine to valine ((c)/(b)) is not more than 5.

5. The beverage according to any one of claims 1 to 4, further comprising (h) raffinose and (i) stachyose, and having a total amount of the raffinose and the stachyose ((h)+(i)) in the tea beverage of 10 to 100 ppm.

6. The beverage according to any one of claims 1 to 5, wherein the volume of the beverage is in the range of 350 mL to 1000 mL.

## Patentansprüche

1. Ein abgepacktes Grünteegetränk, umfassend die nachstehenden Komponenten (a) bis (c):
(a) 50 bis 400 ppm eines Catechins,
(b) 0,5 bis 100 ppm Valin,
(c) 0,1 bis 4,0 ppm Methionin.

2. Das Getränk gemäß Anspruch 1, umfassend 1,0 bis 90 ppm Valin.

3. Das Getränk gemäß Anspruch 1 oder 2, ferner umfassend (f) 2,8 bis 10 ppb Linalol und (g) 0,2 bis 1,0 ppb Phenylacetaldehyd.

4. Das Getränk gemäß einem der Ansprüche 1 bis 3, wobei das Gewichtsverhältnis von Methionin zu Valin ((c)/(b)) nicht mehr als 5 beträgt.

5. Das Getränk gemäß einem der Ansprüche 1 bis 4, ferner umfassend (h) Raffinose und (i) Stachyose, und wobei eine Gesamtmenge der Raffinose und der Stachyose ((h)+(i)) in dem Teegetränk 10 bis 100 ppm beträgt.

6. Das Getränk gemäß einem der Ansprüche 1 bis 5, wobei das Volumen des Getränks im Bereich von 350 mL bis 1000 mL liegt.

## Revendications

1. Boisson au thé vert conditionnée comprenant les composants suivants (a) à (c) :
(a) entre 50 et 400 ppm d'une catéchine,
(b) entre 0,5 et 100 ppm de valine,
(c) entre 0,1 et 4,0 ppm de méthionine.

2. Boisson selon la revendication 1, comprenant entre 1,0 et 90 ppm de valine.

3. Boisson selon la revendication 1 ou 2, comprenant en outre : (f) entre 2,8 et 10 ppb de linalol, et (g) entre 0,2 et 1,0 ppb de phénylacétaldéhyde.

4. Boisson selon l'une quelconque des revendications 1 à 3, où le rapport en poids de la méthionine par rapport à la valine ((c) / (b)), n'est pas supérieur à 5.

5. Boisson selon l'une quelconque des revendications 1 à 4, comprenant en outre : (h) du raffinose, et (i) du stachyose, et présentant une quantité totale de raffinose et de stachyose ((h) + (i)) dans la boisson au thé, comprise entre 10 et 100 ppm.

6. Boisson selon l'une quelconque des revendications 1 à 5, où le volume de la boisson se situe dans une plage comprise entre 350 ml et 1000 ml.
